# EUROPEAN PATENT SPECIFICATION

(11) **EP 1 641 340 B1**
(45) Date of publication and mention of the grant of the patent: **22.11.2006**
(21) Application number: 04748685.7
(22) Date of filing: 28.06.2004
(51) Int. Cl.: A01K 63/04, C02F 3/06, C02F 3/28, C02F 3/12, C02F 3/00

(54) **DEVICE FOR REMOVING IMPURITIES FROM A LIQUID**
VORRICHTUNG ZUR ENTFERNUNG VON VERUNREINIGUNGEN AUS EINER FLÜSSIGKEIT
DISPOSITIF D'ELIMINATION D'IMPURETES D'UN LIQUIDE

(30) Priority: 03.07.2003 NL 1023818; 13.01.2004 NL 1025227
(43) Date of publication of application: 05.04.2006
(73) Proprietor: Gieles Trust B.V., 5815 EJ Merselo (NL)
(72) Inventor: GIELES, Johny, Bernard, NL-5815 EJ Merselo (NL); DONKERS, Johannes, Jacobus, Gerardus, Maria, NL-5423 SP Handel (NL)
(74) Representative: Dorna, Peter
(86) International application number: PCT/NL2004/000455
(87) International publication number: WO 2005/002331

(56) References cited:
- DE-A- 19 839 161
- US-A- 5 232 586
- US-B1- 6 517 724

## Description

The invention relates to a device for removing impurities from a liquid, comprising a reservoir for holding filtering material at the bottom side thereof on the one hand and a liquid, in particular at the upper side above the filtering material, on the other hand, a liquid supply channel opening into the bottom side of the reservoir for supplying liquid to be purified to the reservoir via liquid displacement means, a first liquid discharge channel extending from the upper side of the reservoir for discharging purified liquid from the reservoir and a fluid supply channel opening into the bottom side of the reservoir for causing turbulence in filtering material present in the liquid at regular intervals by supplying a fluid, using fluid displacement means, and thus detaching impurities from said filtering material.

More in particular, the invention is intended and in particular suitable for use with ponds in which (ornamental) fish are present. It is important that the water in such ponds retains a particular level of purity in spite of the production of manure by the fish. Although such manure is decomposed in a fully natural manner by the oxygen in the water, this natural decomposition is insufficient in particular in the case of ponds in which a relatively large number of fish are present. Japanese carp, for example, also referred to as Koi, a Japanese term, are known to produce a relatively great deal of manure, whilst Japanese carp often represent a considerable economic value. For reasons of animal well-being, but certainly also because of the economic value that fish in a pond represent, it is important that additional provisions for purifying the water be made. It is known to use a biological filtering material, in particular in the form of granules, for this purpose. On the one hand, such a biological filtering material acts as a catalyst in the natural decomposition of manure by oxygen. On the other hand, impurities adhere in the form of a slimy layer to the filtering material, which is usually characterized by a rough outer structure. Because of said adherence of the impurities to the filtering material, a certain degree of saturation of the filtering material occurs, as a result of which the purifying action of the biological filtering material may quickly deteriorate.

British patent application GB 2,371,244 A describes a two-stage water purification system. In the first stage, water from a pond is passed through a screen, which retains impurities in the form of particulate material in the water. To prevent the screen becoming clogged, a liquid flow past the screen is created, as a result of which the particles are dislodged from the mesh and settle on the bottom, where said particulate material can be manually removed. Thus, the water quality is adversely affected at first. In the second stage, the pond water to be further purified is carried past a biological filtering material, thus providing a further purification of the water.

An important drawback of this known system is the necessary dimension thereof, so that the system not only takes up a great deal of space but in addition is relatively costly. Furthermore, the through-flow of the system will gradually decrease and be relatively small in practice, whilst in addition the slimy impurities cannot be altogether prevented from depositing on the biological filtering material in the long run, resulting in a deteriorated effect thereof.

A device as referred to in the introduction is known from German patent application DE-A1-19839161. Said document describes a filtering system comprising a reservoir, on the flat bottom of which a granular material is present, through which water to be filtered is passed. Rinsing air can be supplied to the filtering material via the bottom of the reservoir so as to clear of the granular filtering material of impurities adhering thereto. An important drawback of said filtering device is the fact that the degree to which the individual granules of the filtering material are subjected to the action of the rinsing air cannot be controlled in any way. Thus, certain granules of filtering material, for example granules present in the corner of the reservoir, are hardly subjected to the action of the rinsing air, if at all, whilst other granules are subjected to the action of the rinsing air more than is necessary.

The object of the invention is to provide a device as referred to in the introduction, possibly in preferred embodiments of the invention, that provides a solution or at least an improvement as regards the drawbacks of the prior art as described above. In order to accomplish that object and according to claim 1, a pipe comprising a first end positioned at the bottom side of the reservoir and a second end positioned opposite said first end is provided in the reservoir, spaced from the mouth of the fluid supply channel by some distance, for the passage of a fluid being supplied to the reservoir via the fluid supply channel. Thus a strongly improved action as regards the detaching of (slimy) impurities from the biological filtering material is achieved. On the one hand this is achieved in that the filtering material present in the pipe is subjected to a stronger agitating action, in which connection it is noted that besides fluid, also the filtering material will pass through the pipe. On the other hand it is possible in this manner to effect a circulation of the filtering material within the reservoir, so that the filtering material will be more evenly subjected to the action of the fluid flow in that the granular material will be driven upwards within the pipe, whilst it will gradually sink again outside the pipe under the influence of the force of gravity and eventually return to the first end of the pipe. The pipe thus provides a separation between granular filtering material in the pipe and between the mouth and the first end of the pipe on the one hand and the remaining granular filtering material in the reservoir on the other hand, with the former part of the granular material moving away from the mouth and being expressly subjected to the agitating action of the fluid flow, whilst the latter part of the granular filtering material moves towards the mouth, thus creating the aforesaid circulation. It will be apparent within this framework to those skilled in the art that various cross-sectional shapes of the pipe may be used, for example circular, square or elongated.

By way of general explanation it is noted that in practice pond water is supplied to the reservoir via the liquid supply channel, whilst purified liquid is returned to the pond via the first liquid discharge channel. The strength of the device according to the invention is particularly its simplicity. Instead of attempting to prevent slimy impurities from adhering to the biological filtering material, as is the case with the system according to GB 2371244 A, such adherence is allowed now. However, before said adherence of slime to the biological filtering material would lead to a substantially decreased purifying action thereof, said filtering material is agitated by a fluid flowing past, such as a relatively strong liquid flow or a gas flow, more specifically air bubbles, as a result of which the particulate impurities will become detached from the filtering material and be suspended in the liquid above the filtering material on account of the relatively low specific weight of said impurities. From said suspended condition, the particulate impurities can be readily discharged. To that end a screen might be used, for example, which is moved through the liquid by hand, thus catching the suspended impurities.

To facilitate the interception of fluid and filtering material, the pipe is preferably provided with a funnel on the side facing towards the mouth of the fluid supply channel, which funnel flares out in the direction of the mouth of the fluid supply channel.

The second end of the pipe is preferably disposed in the upper side of the reservoir in order to prevent the impurities that have been detached in the pipe from adhering to filtering material again.

In particular in combination with the above preferred embodiment, a resistance element is preferably disposed in the reservoir, spaced from the second end of the pipe by some distance and being in line therewith. The resistance element ensures that the filtering material will to a large extent remain at the bottom side of the reservoir, in spite of the turbulence being produced, so that the discharge of detached impurities can take place more quickly, more efficiently and more simply. In addition, if a second liquid discharge channel is used, biological filtering material is thus prevented from reaching said second liquid discharge channel.

A maximum turbulence of the filtering material can be achieved if the fluid supply channel opens into the bottom of the reservoir.

Preferably, the bottom of the reservoir extends upwards from the mouth of the fluid supply channel, since the biological filtering material, assuming that it is in granular form, will sink towards the mouth of the fluid supply channel under the influence of the force of gravity, where it will be driven away again by the fluid. Thus it is possible, in particular in combination with the use of a pipe according to the main aspect of the present invention, to effect a circulation of filtering material within the reservoir.

A very suitable embodiment is obtained if the bottom of the reservoir is substantially V-shaped, seen in vertical cross-sectional view.

Preferably, the mouth of the fluid supply channel in the reservoir is directed upwards, so that the impurities that have been detached from the filtering material are driven to the upper side of the reservoir, where they will stay longer than the particulate biological filtering material because of their relatively low specific weight.

A convenient manner of discharging impurities that have been detached from the filtering material, which impurities are suspended in the liquid above said filtering material, can be obtained if the device comprises a second liquid discharge channel extending from the upper side of the reservoir for discharging liquid with impurities suspended therein as a result of the turbulence of the filtering material, and shut-off means for shutting off the first liquid discharge channel and/or the second liquid discharge channel. Such a device is pre-eminently suitable for being operated in a fully automated manner, for example by means of a timer, wherein liquid containing impurities that previously adhered to the biological filtering material are discharged, for example to a sewer system, via the second liquid discharge channel during the period that a turbulence is caused in the filtering material and/or for a short period of time thereafter. In order to prevent the suspended contaminations from reaching the pond yet, the shut-off means are provided. Said shut-off means are not necessarily operative on the first liquid discharge channel, since it is also conceivable to use a configuration in which liquid, in order to reach the first liquid discharge channel from the reservoir, must pass the inlet of the second liquid discharge channel. By opening said inlet of the second liquid discharge channel, using the shut-off means, it can be arranged that liquid from the reservoir is temporarily unable to reach the first liquid discharge channel.

If a second liquid discharge channel is used, a weir is preferably provided between the first liquid discharge channel and the second liquid discharge channel. Liquid will not flow over said weir until the liquid discharge channel that is located upstream of the weir has been shut-off by the shut-off means.

In addition to that, the fluid displacement means and the shut-off means are preferably arranged for joint operation, so that the impurities that have been detached from the filtering material by the fluid flow cannot unintentionally reach the pond yet.

Because of the inherent presence of pneumatic facilities for supplying air via the fluid supply channel in those cases in which the fluid being used is air, it is in particular preferable for the shut-off means to operate pneumatically, so that the required pneumatic facilities that are already present can also be used for operating the shut-off means.

Preferably, the shut-off means comprise a membrane, so that pneumatic operation of the shut-off means can easily be realised.

The invention will now be explained in more detail in the description of two preferred embodiments thereof, in which reference is made to the following figures.
Figure 1 is a schematic, vertical cross-sectional view of a first embodiment of a device according to the invention.

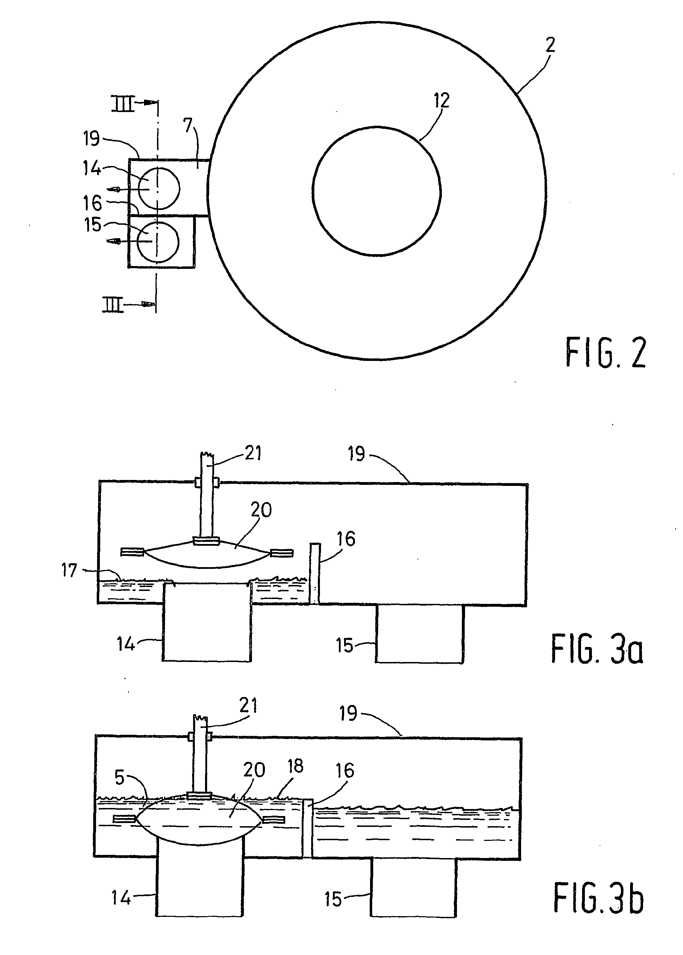

Figure 2 is a top plan view of the device of figure 1.
Figures 3a and 3b are sectional views along the line III-III in figure 2, showing the unclosed position and the closed position, respectively.
Figure 4 is a schematic, vertical cross-sectional view of a second embodiment of a device according to the invention in the stationary position of use.
Figure 5 shows the second embodiment in a rinsing position.

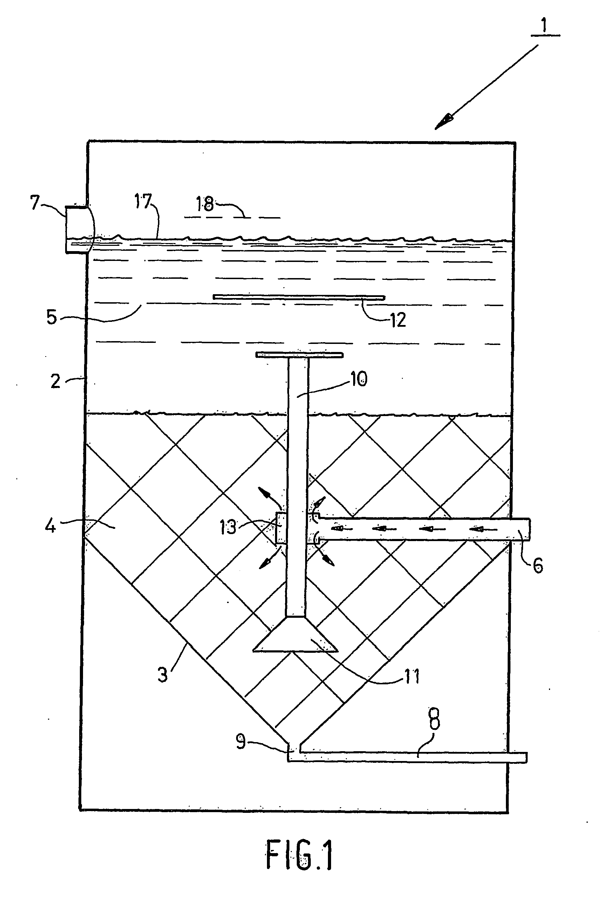

Figure 1 shows a filtering system 1 comprising a cylindrical reservoir 2 having a bottom 3. The bottom 3 is V-shaped, seen in vertical cross-sectional view. Present at the bottom side of the reservoir is a granular biological filtering material 4, whilst the space above said filtering material 4 is filled with pond water 5 up to level 17. It will be understood that water is present also between the grains of the biological filtering material 4. The supply of water to be purified to the reservoir 2 takes place via the water supply pipe 6, which is provided with an annular element 13 at its outflow opening, which element extends around the pipe 10 along part of the length thereof. The annular element 13 is centrally positioned in the biological filtering material 4. The outflow of water takes place either in upward direction or in downward direction via the annular space between the annular element 13 and the outer side of the pipe 10. The biological filtering material 4 on the one hand provides for the decomposition of impurities in the pond water being supplied, whilst on the other hand the impurities will in part adhere to the biological filtering material 4 in the form of a slimy layer. The outflow of purified pond water 5 from the reservoir 2 takes place via the outlet opening 7, where a container 19 (not shown in figure 1) is disposed. Present at the bottom of the container 19 is a circulation pipe 14, which eventually returns the water to the pond from which it originated, and a discharge pipe 15, which is connected to a sewer system. A weir 16 is disposed between the circulation pipe 14 and the discharge pipe 15. Disposed above the circulation pipe 14 is a membrane valve 20, which is not pneumatically energized via a pneumatic pipe 21 during normal use and which consequently does not shut off the circulation pipe 14. Because of the presence of the weir 16, the level of the pond water 5 will remain at the level indicated at 17 during normal use, at which a dynamic balance is reached between the supply of pond order to be purified to the reservoir 2 via the water supply pipe 6 and the discharge of purified pond water 5 via the circulation pipe 14.

An air supply pipe 8 opens into the point of the V-shaped of the bottom 3 at the location indicated by reference numeral 9. The pipe 10 with the funnel 11 present at the bottom thereof is positioned directly above the mouth 9, with the lower end of the pipe 10 being located in the part of the reservoir 2 in which the biological filtering material 4 is present, whilst the upper end of the pipe 10 is located in the part of the reservoir 2 in which particularly pond water 5 and no filtering material 4 is present. Present above the upper end of the pipe 10, spaced therefrom by some distance, is a disc-shaped check member 12.

The operation of the filtering system 1 is as follows. During normal use, pump means (not shown) circulate pond water from a pond via the water supply pipe 6 to the biological filtering material 4, where the purification process, which is known per se, takes place. Then the water is returned to the pond in question via the outlet 7 and the circulation pipe 14. During this process, slimy impurities will gradually adhere to the granular biological filtering material 4. To remove these impurities and thus maintain the purifying action of the biological filtering material 4 at the required standard, air is supplied to the reservoir 2 via the air supply pipe 8 for one or more minutes each day, depending on the expected degree of contamination of the filtering material 4. At the same time, the membrane valve 20 will be energized, as a result of which the circulation pipe 14 is shut off. Since water continues to be supplied from the pond (not shown) via the water supply pipe 6, the level of the pond water 5 in the reservoir 2 will rise from the level indicated at 17 to a higher level indicated at 18, which is the same level as the level of the upper side of the weir 16. When the supply of pond water to the reservoir 2 via the supply pipe 6 is continued, water will flow over the weir 16, which water will be discharged via the discharge pipe 15. This part of the water will contain a significantly higher percentage of suspended impurities, for reasons yet to be explained. Consequently it is not advisable to return this part of the pond water to the pond.

The supply of air via the air supply pipe 8 causes the granular filtering material 4 to be stirred and pushed up via the pipe 10. A funnel 11 is provided for intercepting the filtering material 4. Eventually, the filtering material 4 exits the pipe 10 at the upper end thereof, after which the upward movement is stopped by the check member 12 and the filtering material 4 will sink to the bottom of the reservoir 2 again under the influence of the force of gravity. Because of the agitation to which the filtering material 4 is exposed, the slimy impurities adhering to the filtering material will be detached therefrom. Said detached particles have a relatively low specific weight and will remain suspended in the pond water at the upper side of the reservoir. As already indicated above, this part of the pond water 5 will eventually be discharged via the discharge pipe 15.

Once the filtering material has been cleared of the adhered impurities to a significant extent, the supply of air via the air supply pipe 8 is stopped and the membrane valve 20 is no longer energized, so that the water can circulate via the circulation pipe 14 again and no new water is supplied to the discharge pipe 15. The water level will fall from level 18 to level 17 again. It stands to reason that fresh pond water must be supplied to the reservoir to replace the pond water that has been discharged via the discharge pipe 15.

Although the pipe 8 of the filtering system 1 is used for supplying air, said pipe might alternatively also be used for supplying a liquid, such as water, and even pond water. In that case the granular filtering material 4 will be agitated not by air but by a liquid flow moving upwards into the filtering material 4 via the pipe 8 and the pipe mouth 9, to a significant extent via the pipe 10.

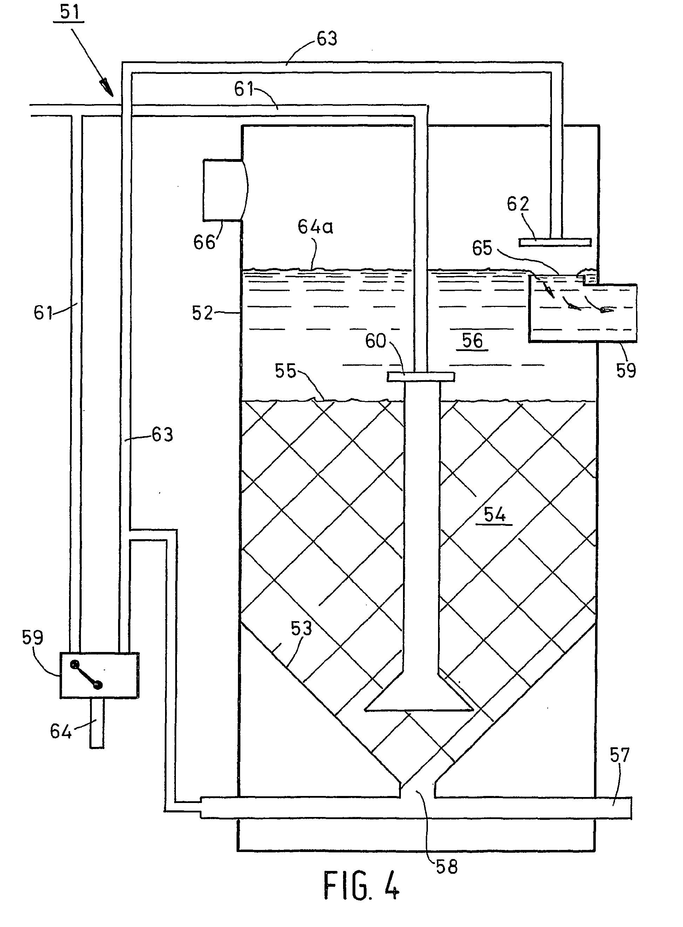

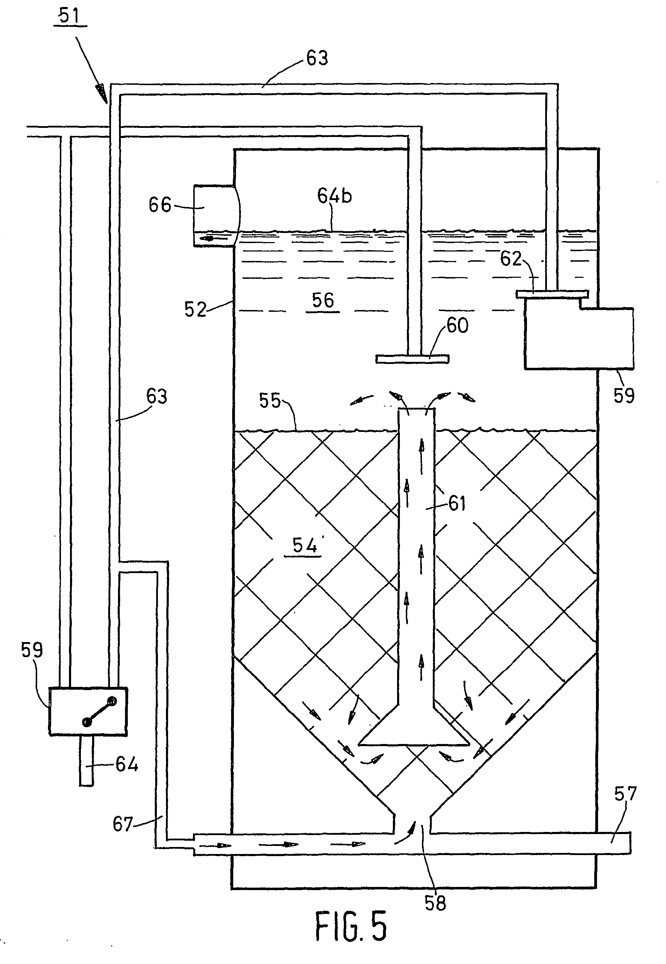

Figures 4 and 5 schematically show a filtering system 51 that likewise falls within the scope of the present invention. Figure 4 shows the normal usage of the system, whilst figure 5 shows a rinsing position that is used periodically, e.g. on a daily basis, for a short period, e.g. 5 minutes, depending on the expected degree of contamination. The filtering system 51 shows a great deal of similarity to the filtering system 1. Thus the system likewise comprises a reservoir 52 having a V-shaped bottom 53, seen in vertical cross-sectional view. Present in the point of the V-shape is a passage 58 for pond water as well as for air, as will become clear hereinafter. A granular biological filtering material 54 is present at the bottom side of the reservoir 52, up to the level indicated at 55. Pond water 56 is circulated through the reservoir 52 by means of a pump (not shown), with the pond water 56 entering the reservoir 52 via the inlet pipe 57 and the passage 58 and, during normal use as shown in figure 4, exiting the reservoir 52 again via the return pipe 59 that extends from the upper part of the reservoir 52 and returning to the pond in question. In the reservoir 52, the pond water 56 passes the filtering material 54, as a result of which the filtering material 54 is cleared of impurities adhering thereto. The upper surface 64a of the water is at the same level as the inlet opening 65 of the return pipe 59.

To remove the impurities adhering to the filtering material 52 from the filtering system 51 so as to ensure a correct operation of the filtering system 51 also after a prolonged period of time, the filtering system 51 can be placed in the rinsing position as shown in figure 5. To that end, the air valve 59 that is connected to a pneumatic supply pipe 64 is switched over. In the normal operating position, the valve 60 is pneumatically energized via valve 59 and pneumatic pipe 61 which connects to valve 59. In this energized condition of the valve 60, a central pipe 61 is closed at the upper end thereof (figure 4). Said upper end is positioned above the level 55 of the filtering material 54. On the one hand, the energized condition of the valve 60 is terminated by switching over the valve 59, as a result of which the valve 60 moves upwards to a limited extent and the upper end of the pipe 61 is opened. On the other hand, the valve 62 is pneumatically energized via the pipe 63, as a result of which, in the first place, the inlet opening 65 of the return pipe 59 is closed, which in turn leads to the level of the water 56 rising to the level 64b when pumping is continued, which level 64b is the level of the discharge pipe 66 that opens into a sewer system.

In the second place, air is supplied to the passage 58 via the pipe 67 that branches off the pipe 63, from which passage 58 the air will flow upwards through the pipe 61, as the upper end thereof is open. During said flow, the air causes the impurities to become detached from the filtering material 54 through which the air passes. Furthermore, filtering material will be carried along by the air flow. To support the interception of air and filtering material in the pipe 61, the pipe 61 is flared at the bottom end. Once the filtering material exits the pipe 61 at the upper side, its relatively high specific weight will cause it to quickly settle on the upper side of the filtering material 54 again under the influence of the force of gravity. The valve 60 functions as a resistance element for stopping the upward movement of the filtering material. At the same time the filtering material 54 will move along the bottom 53 to the passage 58. Thus a circulation of filtering material 54 through the pipe 61 is created, so that all the filtering material 54 is subjected to the rinsing action of the air flow in the pipe 61. The detached impurities are much lighter than the filtering material 54 and remain suspended in the pond water 56 above the filtering material 54, from which they will eventually be discharged to the sewer together with the pond water 56 via the discharge pipe 66. Once the rinsing operation is complete and the impurities suspended in the water 56 have exited the reservoir 52, the valve 59 is switched over to the position that is shown in figure 4 again, so that the filtering system 51 will resume its normal filtering action again.

Various variants of the filtering systems 1 and 51 as described above are possible within the scope of the present invention as defined in the appended claims. The main common advantage of these systems is the simple but very effective purifying effect thereof.

## Claims

1. A device for removing impurities from a liquid, comprising a reservoir (2) for holding filtering material (4) at the bottom side (3) thereof on the one hand and a liquid, in particular at the upper side above the filtering material, on the other hand, a liquid supply channel (6) opening into the bottom side of the reservoir for supplying liquid to be purified to the reservoir via liquid displacement means, a first liquid discharge channel (14) extending from the upper side of the reservoir for discharging purified liquid from the reservoir and a fluid supply channel (8) opening into the bottom side of the reservoir for causing turbulence in filtering material present in the liquid at regular intervals by supplying a fluid, using fluid displacement means, and thus detaching impurities from said filtering material, **characterized in that** a pipe (10) comprising a first end positioned at the bottom side of the reservoir and a second end positioned opposite said first end is provided in the reservoir, spaced from the mouth of the fluid supply channel by some distance, for the passage of a fluid supplied to the reservoir via the fluid supply channel (8).

2. A device according to claim 1, **characterized in that** the pipe (10) is provided with a funnel (11) on the side facing towards the mouth of the fluid supply channel, which funnel flares out in the direction of the mouth of the fluid supply channel.

3. A device according to claim 1 or 2, **characterized in that** the second end of the pipe (10) is disposed in the upper side of the reservoir (2).

4. A device according to claim 1, 2 or 3, **characterized in that** a resistance element (12) is disposed in the reservoir, spaced from the second end of the pipe by some distance and being in line therewith.

5. A device according to any one of the preceding claims, **characterized in that** the fluid supply channel (8) opens into the bottom of the reservoir.

6. A device according to claim 5, **characterized in that** the bottom of the reservoir (2) extends upwards from the mouth (9) of the fluid supply channel.

7. A device according to claim 6, **characterized in that** the bottom of the reservoir (2) is substantially V-shaped, seen in vertical cross-sectional view.

8. A device according to any one of the preceding claims, **characterized in that** the mouth (9) of the fluid supply channel in the reservoir is directed upwards.

9. A device according to any one of the preceding claims, **characterized in that** the device comprises a second liquid discharge channel (15) extending from the upper side of the reservoir for discharging liquid with impurities suspended therein as a result of the turbulence of the filtering material, and shut-off means (20) for shutting off the first liquid discharge channel (14) and/or the second liquid discharge channel.

10. A device according to claim 9, **characterized in that** a weir (16) is provided between the first liquid discharge channel (14) and the second liquid discharge channel (15).

11. A device according to claim 9 or 10, **characterized in that** the fluid displacement means and the shut-off means (20) are arranged for joint operation.

12. A device according to any one of the preceding claims, **characterized in that** said shut-off means (20) operate pneumatically.

13. A device according to any one of the preceding claims, **characterized in that** said shut-off means (20) comprise a membrane.

## Patentansprüche

1. Vorrichtung zum Entfernen von Verunreinigungen aus einer Flüssigkeit, enthaltend einerseits ein Reservoir (2) zum Halten von Filtermaterial (4) an dem unteren Teil (3) davon und andererseits eine Flüssigkeit, insbesondere an dem oberen Teil oberhalb des Filtermaterials, einen Flüssigkeitszufuhrkanal (6), der sich zum unteren Teil des Reservoirs hin öffnet, um zu reinigende Flüssigkeit über Flüssigkeitsverlagerungsmittel dem Reservoir zuzuführen, einen ersten Flüssigkeitsauslasskanal (14), der sich von dem oberen Teil des Reservoirs erstreckt, um gereinigte Flüssigkeit aus dem Reservoir abzulassen, und einen Fluidzufuhrkanal (8), der sich zum unteren Teil des Reservoirs hin öffnet, um durch Zuführen eines Fluids in regelmäßigen Intervallen unter Verwendung von Fluidverlagerungsmitteln eine Verwirbelung im in der Flüssigkeit vorhandenen Filtermaterial zu bewirken und **dadurch** Verunreinigungen vom Filtermaterial zu lösen, **dadurch gekennzeichnet, dass** ein Rohr (10) enthaltend ein erstes Ende, das im unteren Teil des Reservoirs angeordnet ist, und ein zweites Ende, das entgegengesetzt zum ersten Ende angeordnet ist, im Reservoir vorgesehen ist und von der Mündung des Fluidzufuhrkanals in einiger Entfernung beabstandet ist zum Durchfluss eines über den Fluidzufuhrkanal (8) dem Reservoir zugeführten Fluids.

2. Vorrichtung nach Anspruch 1, **dadurch gekennzeichnet, dass** das Rohr (10) an der Seite, die zur Mündung des Fluidzufuhrkanals hin gerichtet ist, mit einem Trichter (11) versehen ist, welcher Trichter sich in Richtung der Mündung des Fluidzufuhrkanals aufweitet.

3. Vorrichtung nach Anspruch 1 oder 2, **dadurch gekennzeichnet, dass** das zweite Ende des Rohrs (10) im oberen Teil des Reservoirs (2) angeordnet ist.

4. Vorrichtung nach Anspruch 1, 2 oder 3, **dadurch gekennzeichnet, dass** ein Widerstandselement (12) im Reservoir angeordnet ist, das vom zweiten Ende des Rohrs in einigem Abstand beabstandet ist und damit fluchtet.

5. Vorrichtung nach einem der vorhergehenden Ansprüche, **dadurch gekennzeichnet, dass** der Fluidzufuhrkanal (8) sich in den Reservoirboden öffnet.

6. Vorrichtung nach Anspruch 5, **dadurch gekennzeichnet, dass** sich der Boden des Reservoirs (2) von der Mündung (9) des Fluidzufuhrkanals nach oben erstreckt.

7. Vorrichtung nach Anspruch 6, **dadurch gekennzeichnet, dass** der Boden des Reservoirs (2) im wesentlichen V-förmig ausgebildet ist, gesehen in vertikaler Schnittansicht.

8. Vorrichtung nach einem der vorhergehenden Ansprüche, **dadurch gekennzeichnet, dass** die Mündung (9) des Fluidzufuhrkanals im Reservoir nach oben verläuft.

9. Vorrichtung nach einem der vorhergehenden Ansprüche, **dadurch gekennzeichnet, dass** die Vorrichtung einen zweiten Flüssigkeitsauslasskanal (15) enthält, der sich vom oberen Teil des Reservoirs erstreckt, um Flüssigkeit mit in Suspension bzw. in Schwebe befindlichen Verunreinigungen darin als Ergebnis der Verwirbelung des Filtermaterials abzulassen, und Abschaltmittel (20) zum Abschalten des ersten Flüssigkeitszufuhrkanals (14) und/oder des zweiten Flüssigkeitszufuhrkanals.

10. Vorrichtung nach Anspruch 9, **dadurch gekennzeichnet, dass** ein Überlauf bzw. Wehr (16) zwischen dem ersten Flüssigkeitszufuhrkanal (14) und dem zweiten Flüssigkeitszufuhrkanal (15) vorgesehen ist.

11. Vorrichtung nach Anspruch 9 oder 10, **dadurch gekennzeichnet, dass** die Fluidverlagerungsmittel und die Abschaltmittel (20) zusammenwirkend angeordnet sind.

12. Vorrichtung nach einem der vorhergehenden Ansprüche, **dadurch gekennzeichnet, dass** die Abschaltmittel (20) pneumatisch arbeiten.

13. Vorrichtung nach einem der vorhergehenden Ansprüche, **dadurch gekennzeichnet, dass** die Abschaltmittel (20) eine Membran aufweisen.

## Revendications

1. Dispositif destiné à retirer des impuretés d'un liquide, comprenant un réservoir (2) pour contenir d'une part un matériau de filtration (4) du côté du fond (3) de celui-ci et d'autre part un liquide, en particulier du côté supérieur au dessus du matériau de filtration, une canalisation d'alimentation en liquide (6) s'ouvrant sur le côté du fond du réservoir pour l'alimentation en liquide devant être purifié vers le réservoir via un moyen de circulation de liquide, une première canalisation d'évacuation de liquide (14) partant du côté supérieur du réservoir pour évacuer du réservoir le liquide purifié et une canalisation d'alimentation en fluide (8) s'ouvrant dans le côté du fond du réservoir pour produire à intervalles réguliers une turbulence dans le matériau de filtration présent dans le liquide par une alimentation en fluide, utilisant un moyen de circulation du fluide, et détachant de la sorte les impuretés dudit matériau de filtration, **caractérisé en ce qu'**un tuyau (10) comprenant une première extrémité placée au côté inférieur du réservoir et une seconde extrémité placée à l'opposé de ladite première extrémité est disposé dans le réservoir, séparé par une certaine distance de l'embouchure de la canalisation d'alimentation en fluide, et destiné au passage d'un fluide alimentant le réservoir via la canalisation d'alimentation en fluide (8).

2. Dispositif selon la revendication 1, **caractérisé en ce que** le tuyau (10) est muni d'un entonnoir (11) sur le côté faisant face à l'embouchure de la canalisation d'alimentation en fluide lequel entonnoir s'évase en direction de l'embouchure de la canalisation d'alimentation en fluide.

3. Dispositif selon la revendication 1 ou 2, **caractérisé en ce que** la seconde extrémité du tuyau (10) est disposée au côté supérieur du réservoir (2).

4. Dispositif selon la revendication 1, 2 ou 3, **caractérisé en ce qu'**un élément d'obstacle (12) est disposé dans le réservoir, à quelque distance de la seconde extrémité du tuyau et en ligne avec celle-ci.

5. Dispositif selon l'une quelconque des revendications précédentes, **caractérisé en ce que** la canalisation d'alimentation en fluide (8) s'ouvre au fond du réservoir.

6. Dispositif selon la revendication 5, **caractérisé en ce que** le fond du réservoir (2) se prolonge en direction du haut à partir de l'embouchure (9) de la canalisation d'alimentation en fluide.

7. Dispositif selon la revendication 6, **caractérisé en ce que** le fond du réservoir (2) est approximativement en forme de V lorsqu'il est vu en coupe transversale verticale.

8. Dispositif selon l'une quelconque des revendications précédentes, **caractérisé en ce que** l'embouchure (9) dans le réservoir de la canalisation d'alimentation en fluide est dirigée vers le haut.

9. Dispositif selon l'une quelconque des revendications précédentes, **caractérisé en ce que** le dispositif comprend une seconde canalisation d'évacuation de liquide (15) partant du côté supérieur du réservoir pour évacuer le liquide avec les impuretés qui y sont suspendues en conséquence de la turbulence du matériau de filtration, et un moyen de coupure (20) pour fermer la première canalisation d'évacuation de liquide (14) et/ou la seconde canalisation d'évacuation de liquide.

10. Dispositif selon la revendication 9, **caractérisé en ce qu'**un barrage (16) est disposé entre la première canalisation d'évacuation de liquide (14) et la seconde canalisation d'évacuation de liquide (15).

11. Dispositif selon la revendication 9 ou 10, **caractérisé en ce que** le moyen de déplacement du fluide et le moyen de coupure (20) sont arrangés pour opérer conjointement.

12. Dispositif selon l'une quelconque des revendications précédentes, **caractérisé en ce que** ledit moyen de coupure (20) fonctionne par air comprimé.

13. Dispositif selon l'une quelconque des revendications précédentes, **caractérisé en ce que** ledit moyen de coupure (20) comprend une membrane.
